Europäisches Patentamt

European Patent Office

Office européen des brevets

(19)

(11) Veröffentlichungsnummer: **0 120 450**
**A1**

(12) **EUROPÄISCHE PATENTANMELDUNG**

(21) Anmeldenummer: 84103099.2

(22) Anmeldetag: 21.03.84

(51) Int. Cl.³: **B 23 B 29/32**

(30) Priorität: 26.03.83 DE 3311105

(43) Veröffentlichungstag der Anmeldung:
03.10.84 Patentblatt 84/40

(84) Benannte Vertragsstaaten:
AT CH DE FR GB IT LI SE

(71) Anmelder: Albert Klopfer GmbH
Industriestrasse 34
D-7253 Renningen(DE)

(72) Erfinder: Rinderknecht, Paul
Brauereistrasse 24
D-7031 Magstadt(DE)

(74) Vertreter: Dipl.-Phys.Dr. Manitz Dipl.-Ing. Finsterwald
Dipl.-Ing. Grämkow Dipl.-Chem.Dr. Heyn Dipl.-Phys.
Rotermund Morgan, B.Sc.(Phys)
Seelbergstrasse 23/25
D-7000 Stuttgart 50(DE)

(54) Revolverkopf.

(57) Der Werkzeugträger (8) eines Revolverkopfes treibt eine elektronische Drehgebervorrichtung (18) an, welche bei Vor- und Rückwärtslauf der jeweiligen Lage des Werkzeugträgers (8) zugeordnete elektrische Signale erzeugt. Diese Signale werden einer programmierbaren elektronischen Steuer- und Regelvorrichtung zugeführt, welche einen vor- und rückwärts antreibbaren Hydromotor (3) derart ansteuert, daß die jeweils durch veränderbares Programm vorgegebene nächste Stellung des Werkzeugträgers (8) auf kürzestem Wege durch Vor- oder Rückwärtslauf erreicht wird.

FIG. 1

EP 0 120 450 A1

Croydon Printing Company Ltd.

0120450

## Revolverkopf

Die Erfindung betrifft einen Revolverkopf, dessen mittels Hydromotors angetriebener Werkzeugträger in mehreren Drehstellungen durch formschlüssige Kupplung von Verzahnungskränzen an dem Werkzeugträger sowie einem stationären Teil verriegelbar ist und eine Drehgebervorrichtung antreibt, welche eine zum Verstellwinkel proportionale Impulszahl erzeugt und an eine numerische Steuerung leitet.

Ein derartiger Revolverkopf ist aus der DE-A-3 033 089 bekannt. Dabei muß der gesamte Werkzeugträger eine axiale Bewegung ausführen, um den am Werkzeugträger angeordneten Verzahnungskranz aus den am stationären Teil angeordneten Verzahnungskranz auszurücken bzw. in denselben einzurücken, da diese beiden Zahnkränze unmittelbar miteinander zusammenwirken. Abgesehen davon, daß die verriegelte Endlage des Werkzeugträgers durch Verschleiß an den Zahnkränzen verändert werden kann und eine derartige Anordnung deshalb hohen Präzisionsanforderungen bei langen wartungsfreien Einsatzzeiten nicht in hinreichendem Maße genügen kann, werden durch die notwendigen axialen Bewegungen des Werkzeugträgers auch die zu seiner Verstellung notwendigen Zeitspannen vergrößert. Im übrigen muß davon ausgegangen werden, daß dieser bekannte Revolverkopf seine Arbeitsstellungen jeweils durch Drehbewegungen mit gleicher Drehrichtung erreicht, jedenfalls wird Gegenteiliges an keiner Stelle erwähnt. Dies kann dann zu besonders langen Verstellzeiten führen, wenn zwei an sich relativ nah benachbarte Werkzeuge am Werkzeugträger in dessen Drehrichtung einen großen Abstand aufweisen. Insgesamt ist also dieser bekannte Revolverkopf weder hinsichtlich seiner Präzision noch hinsichtlich der erreichbaren Verstellzeiten optimal.

0120450

In der DE-A-1 602 902 wird ein weiterer Revolverkopf beschrieben. Hier kann der Werkzeugträger gegenüber einem stationären Teil nur durch kraftschlüssige Kupplung festgelegt werden, indem eine Klemmkette den Werkzeugträger axial mit dem stationären Teil zu verspannen sucht. Dabei ist im Hinblick auf einen wirksamen Kraftschluß zwischen dem stationären Teil und dem Werkzeugträger eine reibungserhöhende Zwischenlage angeordnet. Abgesehen davon, daß durch eine rein kraftschlüssige Verriegelung eine bezüglich des jeweils eingestellten Winkels reproduzierbare und sichere Verriegelungslage bei großen Präzisionsanforderungen nicht gewährleistet werden kann, verändert sich die Verriegelungslage des Werkzeugträgers auch in axialer Richtung entsprechend dem Verschleiß der Zwischenlage. Somit vermag dieser bekannte Revolverkopf höchsten Präzisionsanforderungen nicht zu genügen.

Im übrigen kann dieser Revolverkopf zwar gegebenenfalls durch entsprechende Beeinflussung mittels einer zugeordneten numerischen Steuerung in zueinander entgegengesetzten Drehrichtungen verschwenkt werden, jedoch wird über die Art des Schwenkantriebes nichts ausgesagt.

Aufgabe der Erfindung ist es, einen Revolverkopf zu schaffen, welcher bezüglich der Wiederholgenauigkeit der jeweils vorgegebenen Arbeitsstellungen höchsten Präzisionsanforderungen genügt und sich gleichzeitig bei hohen Verstellgeschwindigkeiten durch eine sehr kompakte Bauweise auszeichnet.

Diese Aufgabe wird dadurch gelöst, daß die Verzahnungskränze an dem Werkzeugträger und dem stationären Teil mittels eines dritten Verzahnungskranzes kuppelbar sind, welcher durch axiale Verschiebung in die beiden vorgenannten Verzahnungskränze einrückbar bzw. aus denselben aushebbar ist, daß die Drehgebervorrichtung bei Erreichen der Nullage des Werkzeugträgers einen Referenzimpuls sowie nach Vor- und Rückwärtsrichtung unterscheidbare Impulse erzeugt, deren Zahl ein Maß der Größe der Drehwinkeländerung des Werkzeugträgers ist, und daß die eingangsseitig an die Drehgebervorrichtung angeschlossene Steuerung ein ausgangsseitig mit ihr verbundenes Servoventil oder Proportional-Magnetventil steuert, welches den Hydromotor in Vor- und Rückwärtsrichtung an die Druckquelle anzuschließen sowie durch Sperrung der Zu- oder Abfuhr des hydraulischen Mediums bzw. durch dessen Drosselung stillzusetzen gestattet.

Da die Drehgebervorrichtung die Nullage durch gesondertes Signal anzeigt, brauchen die Impulse zur Bestimmung der tatsächlich erfolgten Änderung des Drehwinkels jeweils lediglich nach dem letzten Durchlauf der Nullage gezählt und miteinander addiert bzw. voneinander subtrahiert zu werden, so daß die jeweilige Position des Werkzeugträgers mit sehr hoher Sicherheit wiedergegeben wird. Außerdem wird die Nullage vergleichsweise oft durchlaufen. Somit kann die Steuerung die jeweils errechnete Nullage regelmäßig mit der tatsächlichen Nullage vergleichen, so daß die Gefahr von Steuerungsfehlern ausgeräumt ist. Darüber hinaus weisen die jeweils einzustellenden Lagen höchste Wiederholgenauigkeit auf, weil der Werkzeugträgerkopf zur formschlüssigen Verriegelung der am Werkzeugträgerkopf sowie am stationären Teil angeordneten Verzahnungskränze mit dem dritten Verzahnungskranz axial stabil und unverschiebbar gelagert werden kann.

Da zum Verriegeln und Entriegeln des Werkzeugträgerkopfes lediglich der dritte Verzahnungskranz bewegt werden muß, können die genannten Vorgänge schnell und mit geringem Energieaufwand durchgeführt werden.

Darüber hinaus wird durch die Anordnung des Servoventiles bzw. des Proportional-Magnetventiles die Möglichkeit gegeben, auch die Beschleunigungs- und Verzögerungsphase des Werkzeugträgers bei der Verstellung zu steuern. Dadurch kann der Hydromotor mit einem hohen mittleren Druck beaufschlagt werden, ohne daß eine Überlastung zu befürchten wäre. Außerdem kann das Getriebe zwischen Hydromotor und Werkzeugträger vergleichsweise schwach dimensioniert sein.

Der Hydromotor ermöglicht aufgrund seiner hohen Leistungsdichte eine außerordentlich kompakte Bauart des Revolverkopfes, die noch dadurch begünstigt wird, daß auch die Drehgebervorrichtung als elektronische Anordnung sowie das relativ schwach dimensionierte Getriebe außerordentlich raumsparend ausgeführt werden können. Durch entsprechend gesteuerten Anschluß an die hydraulische Druckquelle lassen sich nach Entriegelung des Werkzeugträgers Verstellungen um prinzipiell beliebige Drehwinkel erreichen. Da der Hydromotor ein sehr hohes Drehmoment aufweist und die Verstellung in der jeweils günstigsten Drehrichtung erfolgt, sind die Zeitspannen zwischen zwei verriegelten Arbeitspositionen des Werkzeugträgers außerordentlich kurz.

Zweckmäßigerweise ist der Drehgeber mit Untersetzung vom Werkzeugträger antreibbar, so daß bereits bei kleinen Drehwinkeln eine große Zahl von Impulsen erzeugt und die Meßgenauigkeit dementsprechend erhöht werden.

Besonders vorteilhafte Merkmale der Erfindung sind Gegenstand der Unteransprüche und werden nachfolgend anhand eines bevorzugten Ausführungsbeispiels erläutert, welches in der Zeichnung dargestellt ist. Dabei zeigt

Fig. 1    ein Schnittbild des erfindungsgemäßen
          Revolverkopfes und
Fig. 2    eine schematisierte und vereinfachte
          Darstellung der Steuerung des Hydromotors.

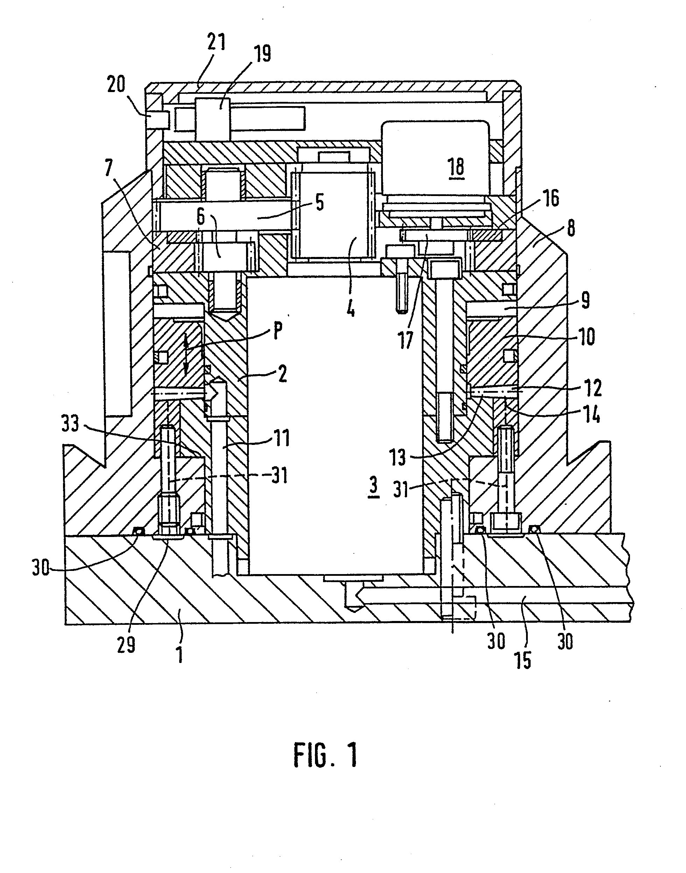

Nach Figur 1 ist auf einer Basisplatte 1 ein aus mehreren Teilen zusammengesetzter, im wesentlichen zylindrischer Ständer 2 fest angeordnet. Dieser Ständer 2 umschließt einen Hydromotor 3, auf dessen Motorwelle ein Ritzel 4 angeordnet ist, welches mit einem Zahnrad 5 kämmt, das zusammen mit einem weiteren Zahnrad 6 fest auf einer im Ständer 2 gelagerten Welle angeordnet ist. Das Zahnrad 6 kämmt seinerseits mit einem Innenverzahnungsring 7, welcher undrehbar mit einem ringkörperartigen Werkzeugträger 8 verbunden ist, der auf dem Ständer 2 bzw. der Basisplatte 1 drehgelagert ist.

Zwischen dem Ständer 2 und dem Werkzeugträger 8 ist ein Ringraum 9 ausgespart, welcher einen entsprechend dem Doppelpfeil P in beiden Richtungen axial verschiebbaren Ringkolben 10 aufnimmt. Der Ringkolben 10 läßt sich über eine in der Basisplatte 1 sowie im Ständer 2 als Bohrung angeordnete Druckleitung 11 auf seiner Unterseite hydraulisch beaufschlagen und nach oben verschieben; die Abwärtsverschiebung erfolgt, wenn der Ringraum 9 oberhalb des Ringkolbens 10 über eine nicht dargestellte Druckleitung unter Druck gesetzt wird.

Der Ringkolben 10 weist auf seiner Unterseite einen Planverzahnungskranz 12 auf, welcher in der nach unten verschobenen Lage des Ringkolbens 10 gleichzeitig in einen am Ständer 2 angeordneten Planverzahnungskranz 13 und einen in etwa gleicher Ebene am Werkzeugträger 8 angeordneten Planverzahnungskranz 14 eingreift und den Werkzeugträger 8 gegenüber der Basisplatte 1 und dem Ständer 2 verriegelt.

In angehobener Lage des Ringkolbens 10 wird der Planverzahnungskranz 12 aus den am Ständer 2 bzw. am Werkzeugträger 8 angeordneten Planverzahnungskränzen 13 und 14 ausgerückt, so daß der Werkzeugträger 8 bei Anschluß des Hydromotors 3 an eine nicht dargestellte Druckquelle - von den zum Anschluß dienenden Druckleitungen ist lediglich eine Leitung 15 dargestellt - um beliebige Drehwinkel verstellt werden kann.

Dabei treibt der Werkzeugträger mittels eines mit dem Innenverzahnungsring 7 drehfest verbundenen weiteren Innenverzahnungsringes 16 über ein mit diesem kämmendes Zahnrad 17 einen inkrementalen Drehgeber 18 an, welcher innerhalb des Werkzeugträgers 8 neben dem Getriebe 5 bis 7 ständerfest untergebracht ist und auf seiner Ausgangsseite bei Durchlauf einer Nullage einen Referenzimpuls sowie je nach Drehrichtung des Werkzeugträgers 8 unterschiedliche Impulse erzeugt, deren Zahl dem jeweiligen Drehwinkel proportional ist.

Im übrigen ist an einem ständerfesten Teil ein induktiver Näherungsschalter 19 angeordnet, welcher ausgangsseitig einen Impuls erzeugt, wenn ihm ein als Markierungselement angeordneter Bedämpfungs-Nocken 20 gegenüberliegt, welcher an einer den Drehgeber 18 sowie den Näherungsschalter 19 umschließenden Haube 21 angeordnet ist, die ihrerseits am Werkzeugträger 8 drehfest angeordnet ist. Dabei ist die Anordnung so getroffen, daß der Referenzimpuls des Drehgebers 18 und der Impuls des Näherungsschalters der gleichen Stellung, d.h. der Nullage, des Werkzeugträgers 8 zugeordnet ist.

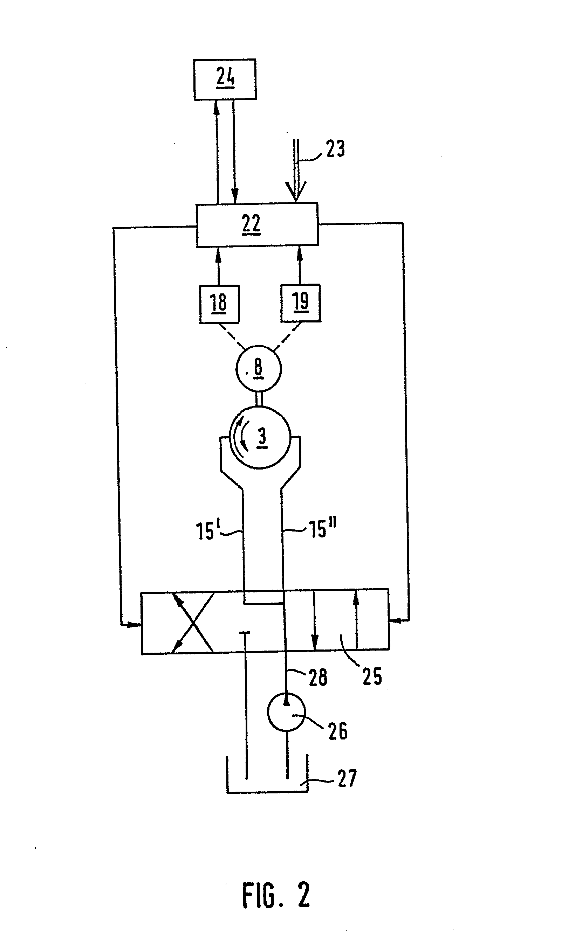

Die Steuerung des dargestellten Revolverkopfes erfolgt prinzipiell gemäß Figur 2. Eine elektronische Steuer- und Regelvorrichtung 22 ist eingangsseitig mit dem inkrementalen Drehgeber 18 sowie dem Näherungsschalter 19 verbunden. Somit kann der Rechner 22 aus der Zahl der vom Drehgeber 18 erzeugten, je nach Drehrichtung unterschiedlichen Impulse nach Durchlauf der Nullage die Istlage des Werkzeugträgers 8 fortlaufend feststellen. Über einen Programmeingang 23 erhält die Steuer- und Regelvorrichtung 22 Informationen bzw. Befehle über die nacheinander anzusteuernden Lagen, in denen der Werkzeugträger 8 verriegelt werden soll. Diese Informationen und Befehle können fortlaufend zugeführt werden oder auch in der Steuer- und Regelvorrichtung 22 nach einmaliger Zuführung gespeichert werden.

Wenn nun der Werkzeugträger 8 aus einer verriegelten Lage in eine andere verriegelte Lage gebracht werden soll, so steuert die Steuer- und Regelvorrichtung 22 zunächst eine Verriegelungssteuerung 24 an, welche zur Entriegelung des Werkzeugträgers die Unterseite des Ringkolbens 12 hydraulisch beaufschlagt. Sobald die Verriegelungssteuerung 24 die erfolgte Entriegelung rückgemeldet hat, steuert der Rechner 22 ein Proportional-Magnetventil 25 an, welches in seiner nicht erregten Mittellage die Leitungen 15' und 15" des Hydromotors 3 miteinander sowie mit der Druckleitung 28 einer Pumpe 26 verbindet.

In der einen erregten Lage verbindet das Proportional-Magnetventil 25 die Druckleitung 28 der Pumpe 26 mit der Leitung 15" des Hydromotors 3, während dessen Leitung 15' mit einem Reservoir 27 verbunden ist. In der anderen erregten Stellung des Proportional-Magnetventiles 25 ist die Druckleitung 28 an die Leitung 15' des Hydromotors 3 angeschlossen, während dessen Leitung 15' zum Reservoir 27 führt. Somit läuft der Hydromotor 3 in Vorwärts- oder Rückwärtsrichtung, je nachdem, welche erregte Lage das Proportional-Magnetventil 25 einnimmt. Im übrigen läßt sich das Proportional-Magnetventil 25 in seinen erregten Stellungen stufenlos drosseln bzw. entdrosseln, so daß der Hydromotor 3 stoßfrei beschleunigt bzw. abgebremst werden kann.

Wenn nun der Hydromotor 3 den Werkzeugträger 8 entsprechend den von der Steuer- und Regelvorrichtung 22 an das Proportional-Magnetventil 25 gegebenen Befehlen verstellt, so erzeugt der vom Werkzeugträger 8 angetriebene Drehgeber 18 eine der Winkelverstellung proportionale Anzahl von Impulsen, aus denen die Steuer- und Regelvorrichtung 22 die jeweils erreichte Lageänderung des Werkzeugträgers 8 sowie den Abstand zur nachfolgend anzusteuernden Lage des Werkzeugträgers 8 errechnen kann. Bei der Verstellung des Werkzeugträgers 8 erzeugen der Drehgeber 18 sowie der Näherungsschalter 19 bei Durchlauf der Nullage je ein Signal, so daß die Steuer- und Regelvorrichtung 22 von Zeit zu Zeit die errechneten Istwerte für die Stellung des Werkzeugträgers 8 überprüfen kann.

Bei Annäherung des Werkzeugträgers 8 an die nächste gewünschte zu verriegelnde Lage wird der Hydromotor 3 durch entsprechende Steuerung des Proportional-Magnetventiles 25 mittels der Steuer- und Regelvorrichtung 22

- 9 -

0120450

abgebremst und bei Erreichen der gewünschten Lage stillgesetzt; sodann steuert die Steuer- und Regelvorrichtung 22 die Verriegelungssteuerung 24 an, die dann ihrerseits die Oberseite des Ringkolbens 10 hydraulisch beaufschlagt, so daß derselbe die Planverzahnungskränze 13 und 14 koppelt und damit den Werkzeugträger 8 gegenüber dem Ständer 2 verriegelt.

Die dargestellte Steuerung des Revolverkopfes ist außerordentlich flexibel, da die Steuer- und Regelvorrichtung 22 jederzeit auf andere Programme umgestellt werden kann, wobei prinzipiell beliebige verriegelte Lagen des Werkzeugträgers 8 in prinzipiell beliebiger Reihenfolge eingestellt werden können. Weiterhin ist vorteilhaft, daß die Steuer- und Regelvorrichtung 22 aus der zeitlichen Aufeinanderfolge der Impulse des Drehgebers 18 auch die Stärke einer Beschleunigung bzw. Verzögerung des Werkzeugträgers 8 feststellen und bei entsprechender Programmierung durch Steuerung des Magnet-Proportionalventils 25 optimal - ohne Stoß - steuern kann. Dadurch lassen sich außerordentlich kurze Einstellzeiten für den Werkzeugträger 8 erreichen, wobei insbesondere die Leistungsfähigkeit der hydraulischen Druckquelle voll ausgenutzt wird.

Im einfachsten Falle erfolgt die Steuerung der Drehbewegungen des Werkzeugträgers 8 lediglich stellungsabhängig.

Jedoch ist es auch möglich, zusätzlich eine zeit- und geschwindigkeitsabhängige Steuerung vorzusehen. Die zeitabhängige Steuerung erfordert keinerlei zusätzlichen Aufwand, da übliche numerische Steuerungen bzw. deren Rechner in der Regel einen Zeitgeber aufweisen, um die jeweiligen Informationen in vorgebbarer Taktfolge verarbeiten zu können.

Die Drehgeschwindigkeit des Werkzeugträgers 8 kann aus der Länge der Zeitintervalle zwischen zwei aufeinanderfolgenden Impulsen des Drehgebers 18 mittelbar bestimmt werden, gegebenenfalls ist es jedoch auch möglich, den Hydromotor 3 mit einem Tachogenerator (nicht dargestellt) zu koppeln, welcher eine geschwindigkeitsabhängige Spannung erzeugt.

Zusätzlich kann das Proportional-Magnetventil 25 bzw. das stattdessen angeordnete Servoventil auch in Abhängigkeit von dem revolverkopfseitigen Hydraulikdruck und/oder der revolverkopfseitigen Hydraulikströmung gesteuert werden, und zwar vorzugsweise durch Soll- und Istwertvergleich.

Um die Reibung zwischen der Basisplatte 1 und dem Werkzeugträger 8 bei dessen Verstellung zu vermindern, kann der Werkzeugträger 8 auf der Basisplatte 1 mittels eines hydrostatischen Lagers 29 angeordnet sein. Dieses Lager 29 wird durch eine relativ schwach ausgeprägte ringförmige Vertiefung in der Basisplatte 1 gebildet, welche seitlich dieser Vertiefung gegenüber dem Werkzeugträger 8 mittels Dichtungen 30 abgedichtet ist. Der von der Vertiefung umschlossene Ringraum ist über Bohrungen 31, welche im dargestellten Beispiel den Planverzahnungskranz 14 sowie die zu dessen Halterung dienenden Schrauben durchsetzen, mit dem Bereich des Ringraumes zwischen den Planverzahnungskränzen 13 und 14 sowie 12 verbunden.

Wird der Raum zwischen den Planverzahnungskränzen 12 bis 14 über die Druckleitung 11 mit einer Hydraulik-Druckquelle verbunden, um den Ringkolben 10 mit dem Planverzahnungskranz 12 in Figur 1 nach oben zu verschieben, so wird über die Bohrungen 31 auch im hydrostatischen Lager 29 ein entsprechender Hydraulikdruck aufgebaut, welcher den Werkzeugträger 8 gegenüber der Basisplatte 1 anzuheben sucht. Dieser Hydraulikdruck wirkt den Druckkräften entgegen, welche auf den Planverzahnungskranz 14 sowie die ringförmige Stufe 33 des Werkzeugträgers 8 einwirken und den Werkzeugträger 8 damit gegen die Basisplatte 1 anzudrücken suchen. Bei entsprechender Bemessung des hydrostatischen Lagers 29 kann also erreicht werden, daß sich die genannten hydraulischen Kräfte aufheben und der Werkzeugträger 8 entsprechend leicht verstellt werden kann. Dabei ist besonders vorteilhaft, daß die genannte Wirkung eintritt, unabhängig davon, wie hoch der hydraulische Druck in der Druckleitung 11 ist. Insbesondere braucht der Druck der zum Antrieb des Revolverkopfes dienenden Druckquelle bei Anschluß an die Druckleitung 11 nicht vermindert zu werden.

Da das Proportional-Magnetventil 25 bzw. das Servoventil auch den Rückfluß des Hydraulikmediums vom Hydromotor 3 zum Reservoir 27 steuern, kann der Werkzeugträger 8 auch bei Anordnung mit horizontaler Schwenkachse und ungleichmäßiger Belastung durch Werkzeuge bei ausgerücktem Planverzahnungskranz 12 keine unerwünschten Eigenbewegungen unter Einwirkung der Schwerkraft ausführen.

0120450

Patentansprüche

1. Revolverkopf, dessen mittels Hydromotor (3) angetriebener Werkzeugträger (8) in mehreren Drehstellungen durch formschlüssige Kupplung von Verzahnungskränzen (12,13,14) an dem Werkzeugträger (8) sowie einem stationären Teil (2) verriegelbar ist und eine Drehgebervorrichtung (18) antreibt, welche eine zum Verstellwinkel proportionale Impulszahl erzeugt und an eine numerische Steuerung leitet, dadurch g e k e n n - z e i c h n e t , daß die Verzahnungskränze (13,14) an dem Werkzeugträger (8) und dem stationären Teil (2) mittels eines dritten Verzahnungskranzes (12) kuppelbar sind, welcher durch axiale Verschiebung in die beiden vorgenannten Verzahnungskränze (13,14) einrückbar bzw. aus denselben aushebbar ist, daß die Drehgebervorrichtung (18) bei Erreichen der Nullage des Werkzeugträgers (8) einen Referenzimpuls sowie nach Vor- und Rückwärtsrichtung unterscheidbare Impulse erzeugt, deren Zahl ein Maß der Größe der Drehwinkeländerung des Werkzeugträgers (8) ist, und daß die eingangsseitig an die Drehgebervorrichtung (18) angeschlossene Steuerung (22) ein ausgangsseitig mit ihr verbundenes Servoventil oder Proportional-Magnetventil (25) steuert, welches den Hydromotor (3) in Vor- und Rückwärtsrichtung an die Druckquelle (26) anzuschließen sowie durch Sperrung der Zu- oder Abfuhr des hydraulischen Mediums bzw. durch dessen Drosselung stillzusetzen gestattet.

2. Revolverkopf nach Anspruch 1, dadurch gekennzeichnet, daß als Drehgebervorrichtung ein die Nullage anzeigender induktiver Näherungsschalter (19) sowie ein inkrementaler Drehgeber (18) angeordnet sind, welcher die nach Vor- und Rückwärtsrichtung unterscheidbaren Impulse erzeugt, deren Anzahl der Größe der Drehwinkeländerung proportional ist.

3. Revolverkopf nach einem der Ansprüche 1 oder 2, dadurch gekennzeichnet, daß die Drehgebervorrichtung bzw. der Drehgeber (18) zur Erhöhung der Zahl der erzeugten Impulse mit Untersetzung vom Werkzeugträger (8) antreibbar ist.

4. Revolverkopf nach einem der Ansprüche 1 bis 3, dadurch gekennzeichnet, daß die Steuer- und Regelvorrichtung (22) Beschleunigungen und/oder Verzögerungen des Werkzeugträgers (8) im Sinne einer stoßfreien Bewegungsänderung steuert.

5. Revolverkopf nach Anspruch 4, dadurch gekennzeichnet, daß die Steuer- und Regelvorrichtung (22) den Hydromotor (3) mittels des hydraulischen Steuerorgans bzw. des Proportional-Magnetventils derart steuert, daß die drehwinkelabhängigen Verstellzeiten des Werkzeugträgers (8) zumindest annähernd unabhängig von den Belastungen durch die Werkzeuge sind.

6. Revolverkopf nach einem der Ansprüche 1 bis 5, dadurch gekennzeichnet, daß der Hydromotor (3) koaxial innerhalb der zylindrischen Mittelöffnung des Werkzeugträgers (8) angeordnet und mit demselben über ein Getriebe (4 bis 7) antriebsmäßig verbunden ist, welches zwischen ein auf der Motorwelle angeordnetes Ritzel (4) und einem am Werkzeugträger (8) angeordneten Zahnring (7), vorzugsweise mit Innenverzahnung, geschaltet ist.

7. Revolverkopf nach einem der Ansprüche 1 bis 6,
dadurch gekennzeichnet, daß der Werkzeugträger (8)
auf einer Basisplatte (1) mittels eines hydrostatischen Lagers (29) axial gelagert ist, welches hydraulisch mit dem an eine Druckleitung (11) anschließbaren Ringraum zwischen den Verzahnungskränzen
(12,13,14) verbunden ist.

8. Revolverkopf nach einem der Ansprüche 1 bis 7,
dadurch gekennzeichnet, daß das Servoventil bzw.
das Proportional-Magnetventil in Abhängigkeit von
dem revolverkopfseitigen Hydraulikdruck und/oder
der revolverkopfseitigen Hydraulikströmung und/oder
der jeweiligen Drehgeschwindigkeit des Werkzeugträgers (8) - vorzugsweise durch Soll- und Istwertvergleich - steuerbar ist.

9. Revolverkopf nach einem der Ansprüche 1 bis 8,
dadurch gekennzeichnet, daß die Bewegungen des
Werkzeugträgers (8) zeit- und/oder stellungsabhängig
- vorzugsweise durch Soll- und Istwertvergleich -
steuerbar sind.

10. Revolverkopf nach einem der Ansprüche 6 bis 9,
dadurch gekennzeichnet, daß die Drehgebervorrichtung
(18) neben dem Getriebe (4 bis 7) innerhalb des
Werkzeugträgers (8) untergebracht ist.

0120450

FIG. 1

FIG. 2

Europäisches
Patentamt

# EUROPÄISCHER RECHERCHENBERICHT

| | **EINSCHLÄGIGE DOKUMENTE** | | EP 84103099.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | GB - A - 2 081 612 (SMT)<br>* Gesamt *<br>-- | 1 | B 23 B 29/32 |
| A | FR - A - 2 419 130 (BANDERA)<br>* Anspruch 1 *<br>-- | 1 | |
| A | DD - A - 151 122 (VEB)<br>* Gesamt *<br>---- | 1 | |

| RECHERCHIERTE SACHGEBIETE (Int. Cl. ³) |
|---|
| B 23 B 29/00 |
| B 23 B 3/00 |

Der vorliegende Recherchenbericht wurde für alle Patentansprüche erstellt.

| Recherchenort | Abschlußdatum der Recherche | Prüfer |
|---|---|---|
| WIEN | 12-06-1984 | FUCHS |